Europäisches Patentamt

European Patent Office

Office européen des brevets

(11) Veröffentlichungsnummer: **0 461 432 A2**

## EUROPÄISCHE PATENTANMELDUNG

(21) Anmeldenummer: **91108299.8**

(22) Anmeldetag: **23.05.91**

(51) Int. Cl.⁵: **H02J 1/14**, H02J 13/00

(30) Priorität: **15.06.90 DE 4019059**

(43) Veröffentlichungstag der Anmeldung:
**18.12.91 Patentblatt 91/51**

(84) Benannte Vertragsstaaten:
**DE FR GB IT**

(71) Anmelder: **ROBERT BOSCH GmbH**
**Postfach 10 60 50**
**W-7000 Stuttgart 10(DE)**

(72) Erfinder: **Holzberg, Jörg, Dipl.-Ing.**
**Eisenbahnstrasse 52C**
**W-7592 Renchen(DE)**
Erfinder: **Kern, Robert, Dipl.-Ing.**
**Felsenweg 2**
**W-7595 Sasbachwalden(DE)**

(54) **Vorrichtung zum Ein- und Ausschalten einer Last.**

(57) Es wird eine Vorrichung zum Ein- und Ausschalten wenigstens einer Last (14, 16) vorgeschlagen, bei der ein Schaltgerät (24) einen Leistungsschalter (11) enthält, der die an eine Stromversorgungsleitung (12) anschließbare Last (14, 16) mit einer Energiequelle (10) verbindet. Bei geöffnetem Leistungsschalter (11) befindet sich die Vorrichtung in einem Ruhezustand, der durch einen der Last (14, 16) zugeordneten Schaltvorgang beendbar ist. Der Schaltvorgang führt zu einem Spannungsabfall an einem Spannungsteiler, der durch einen zum Leistungsschalter (11) parallel geschalteten Ruhestrom-Widerstand (28) und/oder Kondensator (29) und dem Innenwiderstand der Last (14, 16) oder einen an der Stromversorgungsleitung (12) mit einem Weckschalter (20) an Masse (30) schaltbaren Widerstand (22) und/oder Kondensator (23) gebildet wird.

EP 0 461 432 A2

## Stand der Technik

Die Erfindung betrifft eine Vorrichtung zum Ein- und Ausschalten wenigstens einer Last.

In vielen Bereichen der Elektronik, insbesondere bei batteriebetriebenen Systemen, ist es aus Gründen der Energiebilanz erforderlich im inaktiven Zustand einen Ruhebetrieb einzuleiten. Dabei bleibt nur noch der Teil der elektronischen Komponenten mit elektrischer Energie versorgt, der für das Aufwecken des Systems erforderlich ist. Alle anderen Komponenten werden von der Energieversorgung getrennt.

Eine allgemein bekannte Vorrichtung zum Ein- und Ausschalten einer Last ist bei Geräten der Unterhaltungselektronik vorgesehen. Verschiedene Geräte sind beispielsweise über eine Infrarot-Fernbedienung von einem sogenannten Standby-Betrieb heraus einschaltbar. Neben der Versorgung von einzelnen Komponenten mit elektrischer Energie, beispielsweise von Speichereinheiten zum Erhalten des Dateninhalts, muß die Infrarot-Empfangsanlage ständig mit Energie versorgt werden.

Aus der DE-PS 29 11 998 ist eine Stromversorgung für einen Mikroprozessor bekannt, der elektrische Einrichtungen, insbesondere eines Kraftfahrzeugs steuert. Zwischen der Energiequelle und dem Mikroprozessor ist ein steuerbarer Schalter zur Unterbrechung der Stromversorgung angeordnet, der durch kurzzeitig anliegende externe Steuersignale, beispielsweise solche, die in einer Alarmanlage oder in einer Zentralverriegelungsanlage in Kraftfahrzeugen vorgesehen sind, in den stromleitenden Zustand versetzt wird und über einen Ausgang des Mikroprozessors solange im stromleitenden Zustand gehalten wird, bis der durch das externe Steuersignal ausgelöste Programmablauf beendet ist. Bei der bekannten Stromversorgung werden außer der Stromversorgungsleitung für den Mikroprozessor wenigstens eine weitere Steuerleitung zum Schließen des steuerbaren Schalters benötigt.

Der Erfindung liegt die Aufgabe zugrunde, eine Vorrichtung zum Ein- und Ausschalten wenigstens einer Last anzugeben, die den erforderliche Ruhestrom bei abgeschalteter Last minimiert und die mit einfachen Mitteln realisierbar ist.

## Vorteile der Erfindung

Die Aufgabe wird durch die im Hauptanspruch angegebenen Merkmale gelöst.

Die erfindungsgemäße Vorrichtung weist den Vorteil auf, daß über die Stromversorgungsleitung der Last gleichzeitig die Information zum Betätigen des Leistungsschalters geführt wird. Ein weiterer wesentlicher Vorteil liegt darin, daß die Stromversorgungsleitung im Ruhezustand der Last hochohmig mit der Energiequelle verbunden ist. Im Falle eines Kurzschlußes fließt nur ein geringer Kurzschlußstrom. Dieser Vorteil kommt insbesondere zum Tragen, wenn die erfindungsgemäße Vorrichtung als Teil eines Multiplexsystems mit mehreren unabhängigen Lasten vorgesehen ist, das beispielsweise in einem Kraftfahrzeug Verwendung findet.

Vorteilhafte Weiterbildungen und Verbesserungen der erfindungsgemäßen Vorrichtung ergeben sich aus Unteransprüchen.

Eine besonders vorteilhafte Weiterbildung der erfindungsgemäßen Vorrichtung ist durch eine der Last zugeordneten signalverarbeitenden Anordnung gegeben, die auch im abgeschalteten Zustand eine geringe Ruhestromaufnahme aufweist. Dieser Ruhestrom kann beispielsweise zum Aufrechterhalten von Daten in einem Speicher vorgesehen sein. Der parallel zum Leistungsschalter liegende Widerstand ist in diesem Fall derart festzulegen, daß über die Stromversorgungsleitung der benötigte Ruhestrom fließen kann.

Eine zweckmäßige Ausgestaltung der erfindungsgemäßen Vorrichtung ist durch einen wenigstens zur Last parallel schaltbaren Widerstand und/oder Kondensator gegeben. Ein zumindest kurzzeitiges Parallelschalten des Widerstandes und/oder des Kondensators hat an dem zum Leistungsschalter parallelgeschalteten Widerstand und/oder Kondensator wenigstens kurzzeitig einen Spannungsabfall zur Folge, der vom Vergleicher detekierbar ist. Mit dieser Maßnahme kann der auftretende Spannungsabfall auf einen bestimmten Wert festgelegt werden.

Eine andere Ausgestaltung der erfindungsgemäßen Vorrichtung betrifft die Verwendung eines Stromsensors, der den zu wenigstens einer Last fließende Strom erfaßt. Sein Ausgangssignal ist als Abschaltsignal für den Leistungsschalter vorgesehen und kann deshalb der Steueranordnung für den Leistungsschalter zugeleitet werden.

Weitere vorteilhafte Ausgestaltungen und Verbesserungen der erfindungsgemäßen Vorrichtung ergeben sich aus weiteren Unteransprüchen in Verbindung mit der folgenden Beschreibung.

## Zeichnung

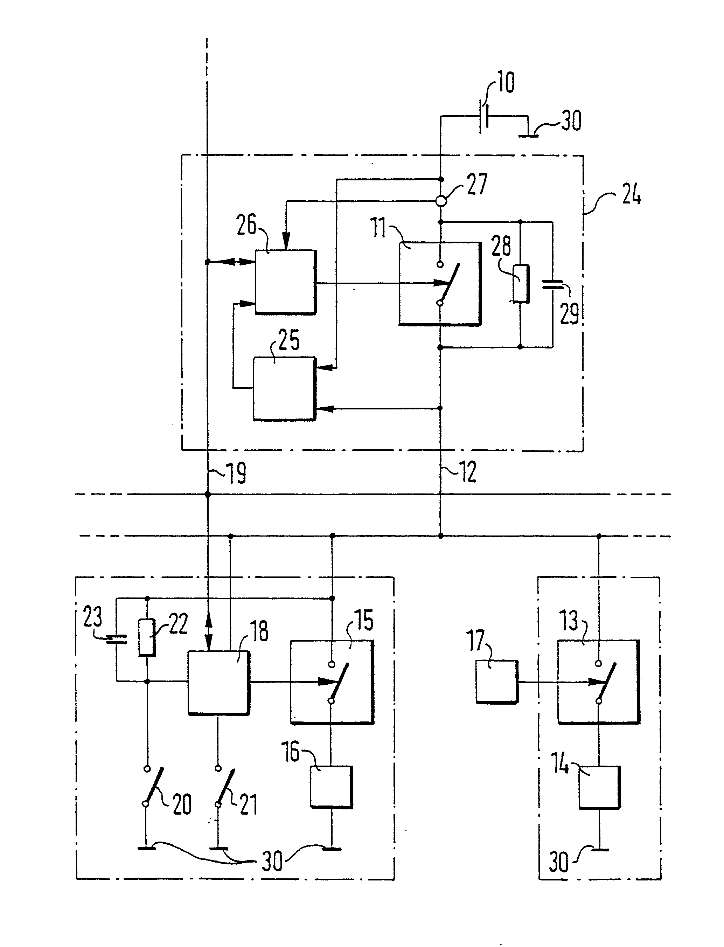

Die Figur zeigt ein Blockschaltbild einer erfindungsgemäßen Vorrichtung zum Ein- und Ausschalten wenigstens einer Last.

Die Figur zeigt eine Energiequelle 10, die über einen Leistungsschalter 11 mit einer Stromversorgungsleitung 12 verbindbar ist. Die Stromversorgungsleitung 12 führt zu einem ersten Schalter 13, der einer ersten Last 14 zugeordnet ist und zu einem zweiten Schalter 15, der einer zweiten Last 16 zugeordnet ist. Der erste Lastschalter 13 ist von einer Vorrichtung 17 betätigbar. Der zweite Lastschalter 15 ist von einer signalverarbeitenden Anordnung 17 betätigbar, die ebenfalls an der Stromversorgungsleitung 12 angeschlossen ist. Die Anordnung 18 ist ferner mit einer Datenleitung 19, mit einem Weckschalter 20 sowie mit eine Ausschalter 21 verbunden. Die beiden Schalter 20, 21 sowie die beiden Lasten 14, 16 und die Energiequelle 10 sind an eine Masse 30 geschaltet. Der Weckschalter 20 ist ferner an einem Widerstand 22 und/oder Kondensator 23 angeschlossen, der an der Leitung 12 liegt.

Der Leistungsschalter 11 ist in einem Schaltgerät 24 angeordnet, das ferner einen Vergleicher 25, eine Steueranordnung 26, einen Stromsensor 27 sowie einen zum Leistungsschalter 11 parallelgeschalteten Widerstand 28 und/oder Kondensator 29 enthält. Der Vergleicher 25 detektiert eine am Leistungsschalter 11 auftretende Spannungsdifferenz und gibt ein Ausgangssignal an die Steueranordnung 26 ab, die den Leistungsschalter 11 betätigt. Die Steueranordnung 26 kann weiterhin an der Datenleitung 19 angeschlossen sein und erhält das vom Stromsensor 27 abgegebene Signal zugeleitet.

Die erfindungsgemäße Vorrichtung arbeitet folgendermaßen:
Das Schaltgerät 24, das räumlich getrennt von der oder den Lasten 14, 16 angeordnet ist, hat die Aufgabe, die Stromversorgungsleitung 12 mit der Energiequelle 10 bei einem Strombedarf wenigstens einer Last 14, 16 zu verbinden. Während dem Ruhezustand bei geöffnetem Leistungsschalter 11 ist die Stromversorgungsleitung 12 über den parallel zum Leistungsschalter 11 geschalteten Widerstand 28 mit der Energiequelle 10 verbunden. Die elektrische Spannung auf der Stromversorgungsleitung 12 entspricht wenigstens näherungsweise der Spannung der Energiequelle 10. Der genaue Wert hängt von dem im Widerstand 28 fließenden Ruhestrom ab. Der Widerstand 28 wird deshalb im folgenden als Ruhestrom-Widerstand 28 bezeichnet. Der Vergleicher 25 vergleicht die Spannung an der Energiequelle 10 mit der an der Stromversorgungsleitung 12 abgreifbaren Spannung. Im Ruhezustand gibt der Vergleicher 25 kein Signal ab.

Die Stromversorgungsleitung 12 kann beispielsweise Teil eines Multiplexsystems mit mehreren Verbrauchern 14, 16 sein, die ihre Energie über die Leitung 12 beziehen. Das Multiplexsystem findet beispielsweise Anwendung im Kraftfahrzeug. Im Ruhezustand ist die Leitung 12 nur über den Widerstand 28 und/oder Kondensator 29 mit der Energiequelle 10 verbunden, so daß im Falle eines Kurzschlusses der Leitung 12 mit Masse 30 nur ein geringer Kurzschlußstrom fließen kann.

Der aktive Zustand der erfindungsgemäßen Vorrichtung ist durch ein wenigstens kurzzeitiges Betätigen des ersten Lastschalters 13 mit der Betätigungsvorrichtung 17 oder des zweiten Lastschalters 15 mit der Anordnung 18 herstellbar. Das Schließen wenigstens eines Lastschalters 13, 14 bewirkt eine Absenkung des Potentials auf der Stromversorgungsleitung 12, weil der Innenwiderstand der Last 14, 16 erheblich niedriger liegt als der Widerstand des Ruhewiderstands 28. Dieser Spannungsabfall detektiert der Vergleicher 25 und gibt daraufhin an die Steueranordnung 26 ein Signal ab, die den Leistungsschalter 11 einschaltet. Die Last 14, 16 ist somit unmittelbar mit der Energiequelle 10 verbunden.

Die Innenwiderstände der Lasten 14, 16 können sehr unterschiedlich sein. Deshalb ist der Widerstand 22 vorgesehen, der mit dem Schalter 20 an Masse 30 schaltbar ist. Der Widerstand 22 bildet mit dem Ruhestrom-Widerstand 28 einen Spannungsteiler mit definiertem Teilverhältnis, das zu einer produzierbaren Potentialabsenkung auf der Stromversorgungsleitung 12 bei Betätigen des Weckschalters 20 führt.

Die Ausgestaltung des Ruhestrom-Widerstands 28 und des Widerstands 22 als ohmsche Widerstände ist bei einer Gleichspannungs-Stromversorgung vorgesehen. Der dem Widerstand 22 parallel geschaltete Kondensator 23 erhöht wenigstens kurzzeitig die Spannungsabsenkung beim Betätigen des Weckschalters 20 auf der Stromversorgungsleitung 12. Die Parallelschaltung des Kondensators 23 ermöglicht es, den Widerstandswert des Widerstands 22 höher zu wählen. Diese Maßnahme reduziert die im Widerstand 22 auftretende Verlustleistung, die bei geschlossenem Leistungsschalter 11 und zusätzlich betätigtem Weckschalter 20 auftritt. In einer wechselspannungsversorgten Vorrichtung können die Widerstände 28, 22, vorzugsweise der Widerstand 22 entfallen. Als Spannungsteiler reicht dann der kapazitive Teiler aus, der die Kondensatoren 29 und 23 enthält. Es kann hier zweckmäßig sein, den Ruhestrom-Widerstand 28 dennoch vorzusehen, damit die Leitung 12 potentialmäßig an die Vorrichtung gebunden bleibt.

Ein wesentlicher Vorteil der erfindungsgemäßen Vorrichtung ist die Bereitstellung einer Ruhestromversorgung, die beispielsweise in der signalverarbeitenden Anordnung 18 auch im Ruhezustand der Vorrichtung gegebenenfalls erforderlich ist. Eine Ruhestromversorgung ist beispielsweise für den Datenerhalt in Speicheranordnungen erforderlich. Die anderen, nicht benötigten Komponenten der signalverarbeitenden Anordnung 18 werden im Ruhezustand abgeschaltet. Der Ruhestrom fließt über den Ruhestromwiderstand 28, an dem ein geringer Spannungsabfall auftritt. Der maximal auftretende Spannungsabfall ist derart festgelegt, daß der Vergleicher 25 kein Signal abgibt.

Der aktive Zustand der erfindungsgemäßen Vorrichtung, bei dem der Leistungsschalter 11 geschlossen ist, ist auf unterschiedliche Arten beendbar. Beispielsweise ist ein Stromsensor 27 vorgesehen, der den durch wenigstens eine eingeschaltete Last 14, 16 fließende Strom erfaßt. Das Abschalten der Last 14, 16 erfolgt durch die Betätigungsvorrichtung 17 oder durch die Anordnung 18. Die Anordnung 18 veranlaßt das Öffnen des zweiten Lastschalters 15 beispielsweise in Abhängigkeit von den auf der Datenleitung 19 zur Anordnung 18 übertragenen Daten, die von einem in der Figur nicht gezeigten Steuergerät generiert werden. Weiterhin kann beispielsweise der Ausschalter 21 vorgesehen sein, der an die Anordnung 18 unmittelbar ein Ausschaltsignal abgibt. Ferner ist es möglich, sowohl im Schaltgerät 24 als auch bei der Anordnung 18 einen Zeitgeber einzusetzen, der nach einer vorgebbaren Zeit die Abschaltung der erfindungsgemäßen Vorrichtung veranlaßt. Ein der Anordnung 18 zugeordneter Zeitgeber veranlaßt das Öffnen des zweiten Lastschalters 15, während ein dem Schaltgerät zugeordneter Zeitgeber das Öffnen des Leistungsschalters 11 veranlaßt.

**Patentansprüche**

1. Vorrichtung zum Ein- und Ausschalten wenigstens einer Last (14, 16), die über einen Schalter (13, 15) mit einer Stromversorgungsleitung (12) verbindbar ist, mit einem Schaltgerät (24), das einen Leistungsschalter (11) zum Verbinden der Stromversorgungsleitung (12) mit einer Energiequelle (10) enthält, dem ein Widerstand (28) und/oder ein Kondensator (29) parallel geschaltet ist, das Mittel (25) zum Vergleich der am Leistungsschalter (11) liegenden Potentiale enthält und das eine Steueranordnung (26) zum Betätigen des Leistungsschalters (11) in Abhängigkeit von dem von den Vergleichsmitteln (25) abgegebenen Einschaltsignal und einem Abschaltsignal enthält.

2. Vorrichtung nach Anspruch 1, mit einer der Last (16) zugeordneten signalverarbeitenden Anordnung (18), die wenigstens an der Stromversorgungsleitung (12) angeschlossen ist.

3. Vorrichtung nach Anspruch 1 oder 2, bei der zumindest ein zum Lastschalter (15) parallelschaltbarer Widerstand (22) und/oder Kondensator (23) vorgesehen ist, wobei ein Anschluß des Lastschalters (15) und des Widerstandes und/oder des Kondensators (23) an der Stromversorgungsleitung (12) anschließbar ist.

4. Vorrichtung nach einem der Ansprüche 1 bis 3, bei der die signalverarbeitende Anordnung (18) den Lastschalter (15) betätigt.

5. Vorrichtung nach einem der Ansprüche 1 bis 4, mit einem Stromsensor (27) zum Detektieren des durch wenigstens eine Last (14, 16) fließenden Stroms, dessen Ausgangssignal zum Öffnen des Leistungsschalters (11) verwendet ist.

6. Vorrichtung nach einem der Ansprüche 1 bis 5, mit einer Datenleitung (19), an die wenigstens die signalverarbeitende Anordnung (18) und ein Steuergerät angeschlossen sind, und die Anordnung (18) den Lastschalter (15) in Abhängigkeit von den an die Anordnung (18) übertragenen Daten öffnet.

7. Vorrichtung nach einem der Ansprüche 1 bis 6, mit einer Datenleitung (19), an die wenigstens die Steueranordnung (26) und ein Steuergerät angeschlossen sind, und die Steueranordnung (26) den Leistungsschalter (11) in Abhängigkeit von den an die Steueranordnung (26) übertragenen Daten öffnet.

8. Vorrichtung nach einem der Ansprüche 1 bis 7, mit einem dem Schaltgerät (24) zugeordneten Zeitgebar, der nach Ablauf einer vorgebbaren Zeit das Öffnen des Leistungsschalters (11) veranlaßt.

9. Vorrichtung nach einem der Ansprüche 1 bis 8, mit einem der signalverarbeitenden Anordnung (18) zugeordneten Zeitgeber, der nach Ablauf einer vorgebbaren Zeit das Öffnen des Lastschalters (15) veranlaßt.

10. Vorrichtung nach einem der Ansprüche 1 bis 9, mit einem der signalverarbeitenden Anordnung (18) zugeordneten Schalter (21), dessen Betätigung das Öffnen des Lastschalters (15) veranlaßt.